# EUROPEAN PATENT APPLICATION

(11) **EP 4 524 477 A1**
(43) Date of publication of application: **19.03.2025**
(21) Application number: 23860769.1
(22) Date of filing: 23.08.2023
(51) Int. Cl.: F24C 7/08, F24C 15/10, H05B 6/06, G06N 20/00

(54) **ELECTRONIC DEVICE FOR CONTROLLING HEATING TEMPERATURE ON BASIS OF TEMPERATURE CHANGE OF FOOD, AND METHOD FOR CONTROLLING SAME**

(30) Priority: 01.09.2022 KR 20220111024
(71) Applicant: Samsung Electronics Co., Ltd., Suwon-si, Gyeonggi-do 16677 (KR)
(72) Inventor: SONG, Hyungseon, Suwon-si Gyeonggi-do 16677 (KR); KIM, Jooyoo, Suwon-si Gyeonggi-do 16677 (KR); BAE, Yoobin, Suwon-si Gyeonggi-do 16677 (KR); KIM, Kyungjae, Suwon-si Gyeonggi-do 16677 (KR); KIM, Dongwook, Suwon-si Gyeonggi-do 16677 (KR)
(74) Representative: Gulde & Partner
(86) International application number: PCT/KR2023/012489
(87) International publication number: WO 2024/049092

(57) **Abstract**

An electronic apparatus is disclosed. The electronic apparatus according to the disclosure includes a heating part heating a subject for cooking, a communication interface receiving a sensing value from an external sensor, a memory storing at least one instruction, and at least one processor that is connected with the memory and controls the electronic apparatus, wherein the at least one processor is configured to, by executing the at least one instruction, acquire information on the temperature of the subject for cooking from the external sensor, identify a heating temperature corresponding to a pattern of the change of the temperature of the subject for cooking, and control the heating part to heat the subject for cooking at the heating temperature.

## Description

### [Technical Field]

The disclosure relates to an electronic apparatus and a controlling method thereof, and more particularly, to an electronic apparatus controlling a heating temperature based on a change of the temperature of a subject for cooking, and a controlling method thereof.

### [Background Art]

A cooking apparatus may perform various cooking functions such as roasting, frying, boiling, etc. In general, a conventional cooking apparatus can cook a subject for cooking at a heating temperature set by a user.

In this case, when the subject for cooking is heated, there is a problem that the user has to manually set the heating temperature according to the subject for cooking so that the subject for cooking does not overflow from the cooking container.

### [Disclosure]

### [Technical Solution]

An electronic apparatus according to one or more embodiments of the disclosure includes a heating part heating a subject for cooking, a communication interface receiving a sensing value from an external sensor, a memory storing at least one instruction, and at least one processor that is connected with the memory and controls the electronic apparatus, wherein the at least one processor is configured to, by executing the at least one instruction, acquire information on the temperature of the subject for cooking from the external sensor, identify a heating temperature corresponding to a pattern of the change of the temperature of the subject for cooking, and control the heating part to heat the subject for cooking at the heating temperature.

A controlling method of an electronic apparatus according to one or more embodiments of the disclosure includes the steps of acquiring information on the temperature of a subject for cooking from an external sensor, identifying a heating temperature corresponding to a pattern of the change of the temperature of the subject for cooking, and heating the subject for cooking at the heating temperature.

In a non-transitory computer-readable recording medium including a program executing a controlling method of an electronic apparatus according to one or more embodiments of the disclosure, the controlling method includes the steps of acquiring information on the temperature of a subject for cooking from an external sensor, identifying a heating temperature corresponding to a pattern of the change of the temperature of the subj ect for cooking, and heating the subject for cooking at the heating temperature.

### [Description of Drawings]

The above and other aspects, features, and advantages of certain embodiments of the present disclosure will be more apparent from the following description taken in conjunction with the accompanying drawings, in which:
FIG. 1 is a block diagram illustrating a configuration of an electronic apparatus according to one or more embodiments of the disclosure;
FIG. 2 is a perspective view of an electronic apparatus and an external sensor according to one or more embodiments of the disclosure;
FIG. 3 is a flow chart illustrating a method for an electronic apparatus to heat a subject for cooking according to one or more embodiments of the disclosure;
FIG. 4A and FIG. 4B are graphs illustrating information for the temperature of a subject for cooking according to one or more embodiments of the disclosure;
FIG. 5 is a flow chart illustrating a method for an electronic apparatus to identify a pattern of the change of the temperature of a subject for cooking according to one or more embodiments of the disclosure;
FIG. 6 is a flow chart illustrating a method for an electronic apparatus to identify a heating temperature of a subject for cooking according to one or more embodiments of the disclosure;
FIG. 7A and FIG. 7B are diagrams illustrating a method for an electronic apparatus to identify a pattern of the change of the temperature of a subject for cooking according to one or more embodiments of the disclosure;
FIG. 8 is a flow chart illustrating a method for an electronic apparatus to identify a pattern of the change of the temperature of a subject for cooking according to one or more embodiments of the disclosure;
FIG. 9A to FIG. 9C are diagrams illustrating a method for an electronic apparatus to identify a pattern of the change of the temperature of a subject for cooking according to one or more embodiments of the disclosure;
FIG. 10 is a flow chart illustrating a method for an electronic apparatus to heat a subject for cooking based on the water level of the subject for cooking according to one or more embodiments of the disclosure; and
FIG. 11 is a sequence diagram illustrating a method for an electronic apparatus to control an external cooking apparatus according to one or more embodiments of the disclosure.

### [Mode for Invention]

Various modifications may be made to the embodiments of the disclosure, and there may be one or more types of embodiments. Accordingly, specific embodiments will be illustrated in drawings, and the embodiments will be described in detail in the detailed description. However, it should be noted that the one or more embodiments are not intended to limit the scope of the disclosure to a specific embodiment, but they should be interpreted to include all modifications, equivalents, and/or alternatives of the embodiments of the disclosure. Also, with respect to the detailed description of the drawings, similar components may be designated by similar reference numerals.

Also, in describing the disclosure, in case it is determined that detailed explanation of related known functions or features may unnecessarily confuse the gist of the disclosure, the detailed explanation will be omitted.

In addition, the embodiments herein may be modified in various different forms, and the scope of the technical idea of the disclosure is not limited to the embodiments herein. Rather, these embodiments are provided to make the disclosure more sufficient and complete, and to fully convey the technical idea of the disclosure to those skilled in the art.

Further, the terms used in the disclosure are just used to explain specific embodiments, and are not intended to limit the scope of the disclosure. Also, singular expressions include plural expressions, unless defined obviously differently in the context.

Also, in the disclosure, expressions such as "have," "may have," "include," and "may include" denote the existence of such characteristics (e.g., elements such as numbers, functions, operations, and components), and do not exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

Further, the expressions "first," "second," and the like used in the disclosure may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g., a second element) should be interpreted to include both the case where the one element is directly coupled to the another element, and the case where the one element is coupled to the another element through still another element (e.g., a third element).

In contrast, the description that one element (e.g., a first element) is "directly coupled" or "directly connected" to another element (e.g., a second element) can be interpreted to mean that still another element (e.g., a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that an apparatus is "specifically designed to" in terms of hardware.

Instead, under some circumstances, the expression " an apparatus configured to" may mean that the apparatus "is capable of" performing an operation together with another apparatus or component. For example, the phrase "a processor configured to perform A, B, and C" may mean a dedicated processor (e.g., an embedded processor) for performing the corresponding operations, or a generic-purpose processor (e.g., a CPU or an application processor) that can perform the corresponding operations by executing one or more software programs stored in a memory device.

Also, in the embodiments of the disclosure, "a module" or "a part" may perform at least one function or operation, and may be implemented as hardware or software, or as a combination of hardware and software. Also, a plurality of "modules" or "parts" may be integrated into at least one module and implemented as at least one processor, excluding "a module" or "a part" that needs to be implemented as specific hardware.

Meanwhile, various elements and areas in the drawings were illustrated schematically. Accordingly, the technical idea of the disclosure is not limited by the relative sizes or intervals illustrated in the accompanying drawings.

Hereinafter, the embodiments according to the disclosure will be described in detail to the extent that a person having ordinary knowledge in the technical field to which the disclosure belongs can easily carry out the embodiments with reference to the accompanying drawings.

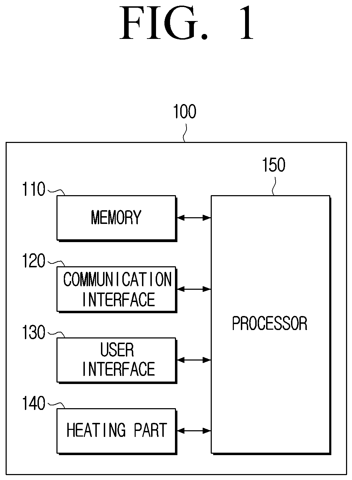

FIG. 1 is a block diagram illustrating a configuration of an electronic apparatus according to one or more embodiments of the disclosure.

The electronic apparatus 100 may include a memory 110, a communication interface 120, a user interface 130, a heating part 140, and at least one processor 150. In the electronic apparatus 100, some of the above components may be omitted, and other components may further be included.

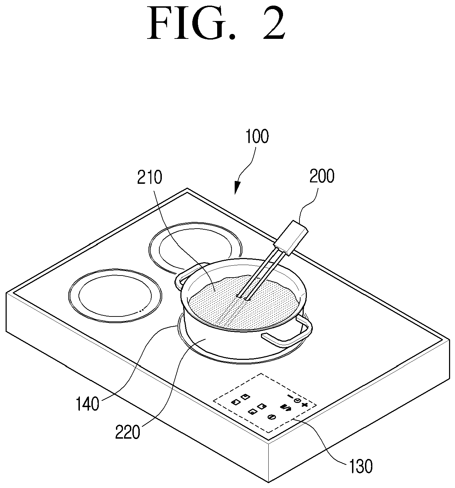

Also, the electronic apparatus 100 may be a cooking apparatus heating a subject for cooking. For example, the electronic apparatus 100 may be implemented as an induction apparatus as illustrated in FIG. 2A, but this is merely an example, and the electronic apparatus 100 may be a highlight apparatus, a gas oven, an electric oven, a microwave, a gas range, etc.

Alternatively, the electronic apparatus 100 may be an apparatus controlling a cooking apparatus. For example, the electronic apparatus 100 may be implemented as a smartphone, a mobile phone, a server, a personal digital assistant (PDA), a laptop, a media player, an e-book reader, a terminal for digital broadcasting, a navigation, a kiosk, an MP3 player, a wearable apparatus, a home appliance, and other mobile or non-mobile computing apparatuses, and control a cooking apparatus by performing communication with the cooking apparatus via wire or wirelessly.

The memory 110 may store at least one instruction regarding the electronic apparatus 100. Also, the memory 110 may store an operating system (O/S) for driving the electronic apparatus 100. In addition, the memory 110 may store various kinds of software programs or applications for the electronic apparatus 100 to operate according to one or more embodiments of the disclosure. Also, the memory 110 may include a semiconductor memory such as a flash memory or a magnetic storage medium such as a hard disk.

Specifically, the memory 110 may store various kinds of software modules for the electronic apparatus 100 to operate according to one or more embodiments of the disclosure, and the processor 150 may control the operations of the electronic apparatus 100 by executing the various kinds of software modules stored in the memory 110. That is, the memory 110 may be accessed by the processor 150, and reading/recording/correction/deletion/update, etc. of data by the processor 150 may be performed.

Meanwhile, in the disclosure, the term "memory 110" may be used as a meaning including the memory 110, a ROM or a RAM inside the processor 150, or a memory card installed on the electronic apparatus 100 (e.g., a micro SD card, a memory stick).

Also, the communication interface 120 includes circuitry, and it is a component that can communicate with an external apparatus or a server. The communication interface 120 may perform communication with an external apparatus or a server based on a wired or wireless communication method. The communication interface 120 may include a Bluetooth module, a Wi-Fi module, an infrared (IR) module, a local area network (LAN) module, an Ethernet module, etc. Here, each communication module may be implemented as at least one hardware chip. A wireless communication module may include at least one communication chip that performs communication according to various wireless communication protocols such as Zigbee, a Universal Serial Bus (USB), a Mobile Industry Processor Interface Camera Serial Interface (MIPI CSI), 3rd Generation (3G), 3rd Generation Partnership Project (3GPP), Long Term Evolution (LTE), LTE Advanced (LTE-A), 4th Generation (4G), 5th Generation (5G), etc. other than the aforementioned communication methods.

Referring to FIG. 2, the electronic apparatus 100 may acquire a sensing value of an external sensor 200 from the external sensor 200 through the communication interface 120. Here, the external sensor 200 may be a sensor which is held on a cooking container 220 and is for measuring the temperature or the water level of a subject for cooking 210. That is, the electronic apparatus 100 may acquire information on the temperature of the subject for cooking 210 and information on the water level of the subject for cooking 210 inside the cooking container 220 from the external sensor 200. Here, the subject for cooking 210 may be water or water including a foreign substance (e.g., soup). Also, the subject for cooking 210 may be accommodated in the cooking container 220 (e.g., a pot).

The user interface 130 is a component for receiving an input of a user instruction for controlling the electronic apparatus 100. The user interface 130 may be implemented as an apparatus such as a button, a touch pad, a mouse, and a keyboard, or implemented as a touch screen that can perform both a display function and a manipulation input function. Here, a button may be various types of buttons such as a mechanical button, a touch pad, a wheel, etc. formed in any areas such as the front surface part or the side surface part, the rear surface part, etc. of the exterior of the main body of the electronic apparatus 100. The electronic apparatus 100 may acquire various user inputs through the user interface 130. Also, the electronic apparatus 100 may acquire a user input for heating a subject for cooking through the user interface 130. Here, a user input for heating a subject for cooking may be a user input for setting at least one of a heating temperature, a heating degree, a heating level, or a heating mode.

The heating part 140 may include a component for heating a subject for cooking or a cooking container, and a driving circuit that drives the component for heating a subject for cooking or a cooking container. For example, the heating part 140 may include a coil generating a magnetic field and a driving circuit driving the coil. Alternatively, the heating part 140 may include a heating wire generating heat and a driving circuit driving the heating wire.

The at least one processor 150 may control the overall operations and functions of the electronic apparatus 100. Specifically, the at least one processor 150 is connected with the components of the electronic apparatus 100 including the memory 110, and control the overall operations of the electronic apparatus 100 by executing at least one instruction stored in the memory 110 as described above.

The at least one processor 150 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor may control one or a random combination of the other components of the electronic apparatus, and perform an operation related to communication or data processing. Also, the at least one processor may execute one or more programs or instructions stored in the memory. For example, the at least one processor may perform the method according to one or more embodiments of the disclosure by executing at least one instruction stored in the memory.

In case the method according to one or more embodiments of the disclosure includes a plurality of operations, the plurality of operations may be performed by one processor, or performed by a plurality of processors. For example, when a first operation, a second operation, and a third operation are performed by the method according to one or more embodiments, all of the first operation, the second operation, and the third operation may be performed by a first processor, or the first and second operations may be performed by the first processor (e.g., a generic-purpose processor), and the third operation may be performed by a second processor (e.g., an artificial intelligence-dedicated processor).

The at least one processor may be implemented as a single core processor including one core, or may be implemented as at least one multicore processor including a plurality of cores (e.g., multicores of the same kind or multicores of different kinds). In case the at least one processor is implemented as a multicore processor, each of the plurality of cores included in the multicore processor may include an internal memory of the processor such as a cache memory, an on-chip memory, etc., and a common cache shared by the plurality of cores may be included in the multicore processor. Also, each of the plurality of cores (or some of the plurality of cores) included in the multicore processor may independently read a program instruction for implementing the method according to one or more embodiments of the disclosure and perform the instruction, or the plurality of entire cores (or some of the cores) may be linked with one another, and read a program instruction for implementing the method according to one or more embodiments of the disclosure and perform the instruction.

In case the method according to one or more embodiments of the disclosure includes a plurality of operations, the plurality of operations may be performed by one core among the plurality of cores included in the multicore processor, or performed by the plurality of cores. For example, when the first operation, the second operation, and the third operation are performed by the method according to one or more embodiments, all of the first operation, the second operation, and the third operation may be performed by a first core included in the multicore processor, or the first and second operations may be performed by the first core included in the multicore processor, and the third operation may be performed by a second core included in the multicore processor.

In one or more embodiments of the disclosure, the processor may mean a system on chip (SoC) on which at least one processor and other electronic components are integrated, a single core processor, a multicore processor, or cores included in a single core processor or a multicore processor. Also, here, the cores may be implemented as a CPU, a GPU, an APU, an MIC, a DSP, an NPU, a hardware accelerator or a machine learning accelerator, etc., but the embodiments of the disclosure are not limited thereto.

The operations of the at least one processor 150 for implementing one or more embodiments of the disclosure may be implemented through a plurality of modules.

Specifically, data regarding the plurality of modules according to the disclosure may be stored in the memory 110, and the at least one processor 150 may access the memory 110 and load the data regarding the plurality of modules on a memory or a buffer inside the at least one processor 150, and then implement one or more embodiments according to the disclosure by using the plurality of modules.

Meanwhile, at least one of the plurality of modules according to the disclosure may be implemented as hardware, and may be included inside the at least one processor 150 in the form of a system on chip.

Alternatively, at least one of the plurality of modules according to the disclosure may be implemented as a separate external apparatus, and the electronic apparatus 100 and each module may perform the operations according to the disclosure by performing communication with one another.

Hereinafter, the operations of the processor according to the disclosure will be described in detail.

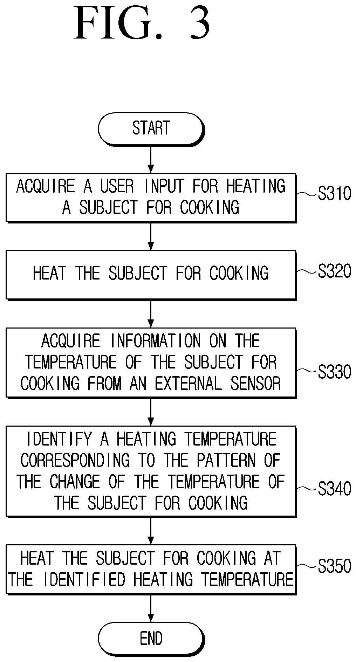

Referring to FIG. 3, the at least one processor 150 may acquire a user input for heating a subject for cooking through the user interface 130 in operation S310. Here, the user input for heating a subject for cooking may be a user input for setting at least one of a heating temperature, a heating degree, a heating level, or a heating mode.

When a user input for heating a subject for cooking is acquired, the at least one processor 150 may control the heating part 140 to heat the subject for cooking in operation S320.

Also, while the subject for cooking is being heated, the at least one processor 150 may acquire information on the temperature of the subject for cooking from the external sensor 200 through the communication interface 120 in operation S330. Specifically, when a user input for heating a subject for cooking is acquired, the at least one processor 150 may transmit a request signal for acquiring information on the temperature of the subject for cooking to the external sensor 200. Then, while the subject for cooking is being heated, the at least one processor 150 may acquire the information on the temperature of the subject for cooking from the external sensor 200.

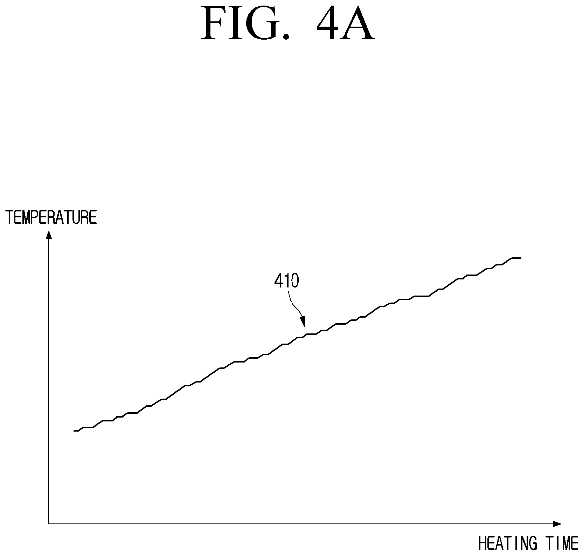

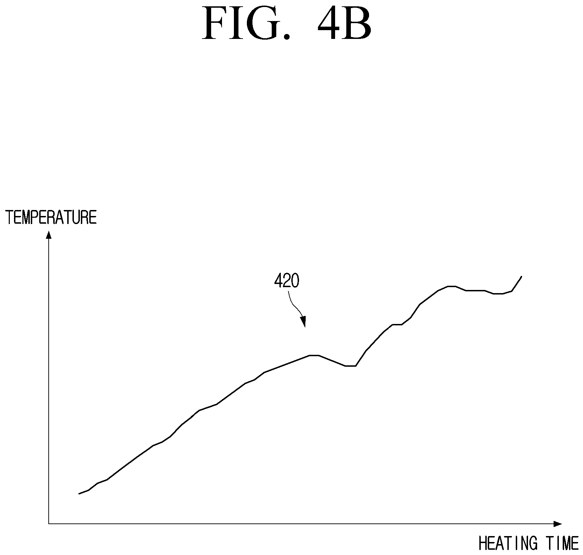

Here, the information on the temperature of the subject for cooking may be expressed as a graph indicating temperature values of the subject for cooking according to the heating time as illustrated in FIG. 4A and FIG. 4B. FIG. 4A may mean a change 410 of the temperature of water while the water is being heated in case the subject for cooking is water. FIG. 4B may mean a change 420 of the temperature of water including a foreign substance in case the subject for cooking is water including a foreign substance.

Then, when the information on the temperature of the subject for cooking is acquired, the at least one processor 150 may identify a heating temperature corresponding to the pattern of the change of the temperature of the subject for cooking in operation S340. When the heating temperature is identified, the at least one processor 150 may control the heating part 140 to heat the subject for cooking at the identified heating temperature in operation S350. In this case, the heating temperature corresponding to the pattern of the change of the temperature of the subject for cooking may mean a temperature for preventing a phenomenon wherein the subject for cooking overflows to the outside of the cooking container.

Meanwhile, according to one or more embodiments of the disclosure, the at least one processor 150 may monitor the information on the temperature of the subject for cooking while the subject for cooking is being heated, and identify the heating temperature corresponding to the pattern of the change of the temperature of the subject for cooking based on whether the temperature of the subject for cooking became a specific temperature.

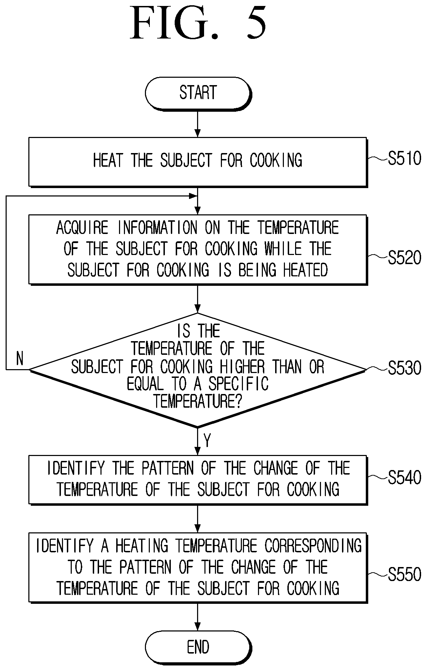

Specifically, referring to FIG. 5, the at least one processor 150 may heat a subject for cooking at a heating temperature set based on a user input for heating the subject for cooking in operation S510.

Then, the at least one processor 150 may acquire information on the temperature of the subject for cooking while the subject for cooking is being heated in operation S520. Then, the at least one processor 150 may identify whether the temperature of the subject for cooking is higher than or equal to a specific temperature in operation S530. Here, the information on the specific temperature may be stored in the memory 110.

If it is identified that the temperature of the subject for cooking is lower than the specific temperature in operation S530-N, the at least one processor 150 may continuously heat the subject for cooking in operation S510.

If it is identified that the temperature of the subject for cooking is higher than or equal to the specific temperature in operation S530-Y, the at least one processor 150 may identify the pattern of the change of the temperature of the subject for cooking in operation S540.

Then, the at least one processor 150 may identify a heating temperature corresponding to the pattern of the change of the temperature of the subject for cooking in operation S550.

Meanwhile, the pattern of the change of the temperature of the subj ect for cooking may mean the degree that the temperature of the subject for cooking changes while the temperature of the subject for cooking is rising. That is, the at least one processor 150 may identify a value indicating the degree that the temperature of the subject for cooking changes while the temperature of the subject for cooking is rising.

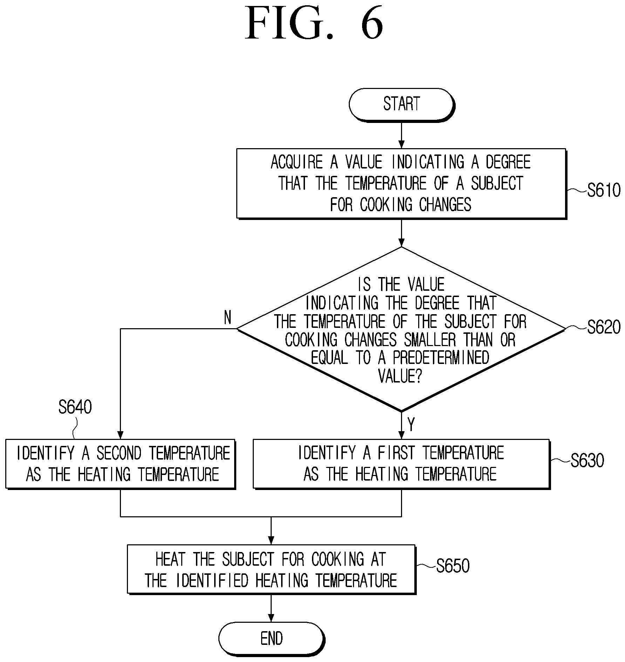

Here, the at least one processor 150 may identify the heating temperature by comparing the degree that the temperature of the subject for cooking changes with a predetermined value. Specifically, referring to FIG. 6, the at least one processor 150 may acquire a value indicating the degree that the temperature of the subject for cooking changes in operation S610.

Then, the at least one processor 150 may identify whether the value indicating the degree that the temperature of the subject for cooking changes is smaller than or equal to the predetermined value in operation S620.

If the value indicating the degree that the temperature of the subject for cooking changes is smaller than or equal to the predetermined value in operation S620-Y, the at least one processor 150 may identify a first temperature as the heating temperature in operation S630. Meanwhile, if the value indicating the degree that the temperature of the subject for cooking changes exceeds the predetermined value in operation S620-N, the at least one processor 150 may identify a second temperature lower than the first temperature as the heating temperature in operation S640. Here, the information on the predetermined value and the first temperature and the second temperature may be stored in the memory 110.

Alternatively, the at least one processor 150 may identify a heating temperature corresponding to the value indicating the degree that the temperature of the subject for cooking changes. Here, the information on the heating temperature corresponding to the value indicating the degree that the temperature of the subject for cooking changes may be stored in the memory 110. That is, as the value indicating the degree that the temperature of the subject for cooking changes increases or decreases, the heating temperature corresponding to the value indicating the degree that the temperature of the subject for cooking changes may be changed linearly or non-linearly.

Also, when the heating temperature is identified, the at least one processor 150 may control the heating part 140 to heat the subject for cooking at the identified heating temperature in operation S650.

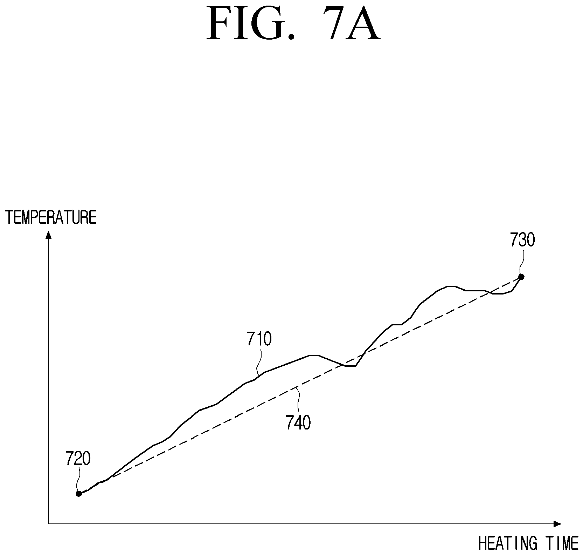

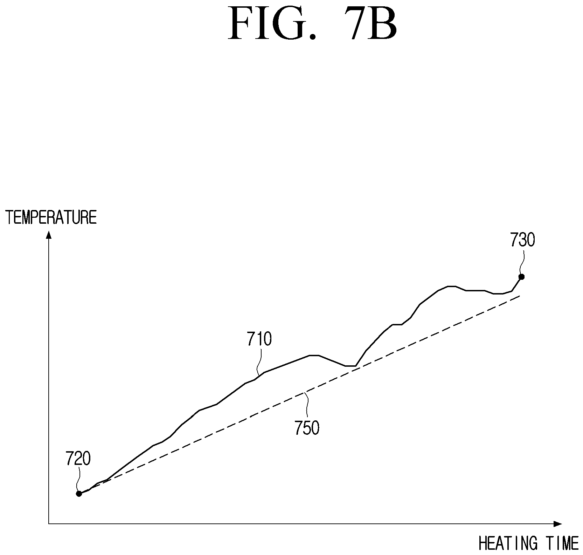

Meanwhile, a detailed method for the at least one processor 150 to identify a value indicating the degree that the temperature of the subject for cooking changes will be described with reference to FIG. 7A and FIG. 7B.

According to one or more embodiments of the disclosure, the at least one processor 150 may acquire information on a straight line 740 connecting a point 720 indicating a temperature value of a subject for cooking on a first time point and a point 730 indicating a temperature value of the subject for cooking on a second time point in a graph 710 of a change of the temperature of the subject for cooking (i.e., a temperature data set) as illustrated in FIG. 7A. Here, the first time point may mean the starting point of heating or an initial time point when the temperature of the subject for cooking was acquired. Also, the second time point may mean a time point when the temperature of the subject for cooking is a specific temperature. Here, information on the specific temperature may be stored in the memory 110.

Then, the at least one processor 150 may acquire a value indicating a deviation between the graph 710 of the temperature data set reflecting the change of the temperature of the subject for cooking and the acquired straight line 740. Then, the at least one processor 150 may identify a heating temperature corresponding to the acquired value indicating the deviation.

Specifically, the at least one processor 150 may acquire a mean absolute error (MAE) value between the graph 710 of the change of the temperature of the subject for cooking and the straight line 740. Then, the at least one processor 150 may identify a heating temperature corresponding to the acquired MAE value.

Here, if the acquired MAE value is smaller than or equal to a predetermined value, the at least one processor 150 may identify the first temperature as the heating temperature. Meanwhile, if the acquired MAE value exceeds the predetermined value, the at least one processor 150 may identify the second temperature lower than the first temperature as the heating temperature.

According to one or more embodiments of the disclosure, the at least one processor 150 may acquire a straight line 750 by performing regression analysis of the change of the temperature of the subject for cooking between the first time point 720 and the second time point 730 in the graph 710 of the change of the temperature of the subject for cooking as illustrated in FIG. 7B. For example, the at least one processor 150 may acquire the straight line 750 by using a linear regression analysis method using the method of least squares, but this is merely an example, and the at least one processor 150 may acquire the straight line 750 by using various regression analysis methods.

Then, the at least one processor 150 may acquire a value indicating a deviation between the graph 710 of the change of the temperature of the subject for cooking and the acquired straight line 750. Then, the at least one processor 150 may identify a heating temperature corresponding to the acquired value indicating the deviation.

Specifically, the at least one processor 150 may acquire a mean absolute error (MAE) value between the straight line 750 acquired by performing regression analysis of the change of the temperature of the subject for cooking and the change of the temperature of the subject for cooking. Then, the at least one processor 150 may acquire a heating temperature corresponding to the MAE value.

That is, if the acquired MAE value is smaller than or equal to the predetermined value, the at least one processor 150 may identify the first temperature as the heating temperature. Meanwhile, if the acquired MAE value exceeds the predetermined value, the at least one processor 150 may identify the second temperature lower than the first temperature as the heating temperature.

Meanwhile, in the disclosure, a value indicating a degree that the temperature of a subject for cooking changes or a value indicating a deviation between a graph of the temperature of a subject for cooking and an acquired straight line may be an MAE value. However, this is merely an example, and the values may be implemented as various values for indicating a degree that the temperature of a subject for cooking changes or for indicating a deviation between the temperature of a subject for cooking and an acquired straight line such as a mean squared error (MSE) value, etc.

Meanwhile, while a subject for cooking is being heated based on an identified heating temperature, the type of the subject for cooking may be changed. For example, after water is heated to a specific temperature, various food ingredients may be introduced into the water. Here, if the type of the subject for cooking changes, the at least one processor 150 may re-identify the heating temperature. Then, the at least one processor 150 may control the heating part 140 to heat the subject for cooking at the re-identified heating temperature.

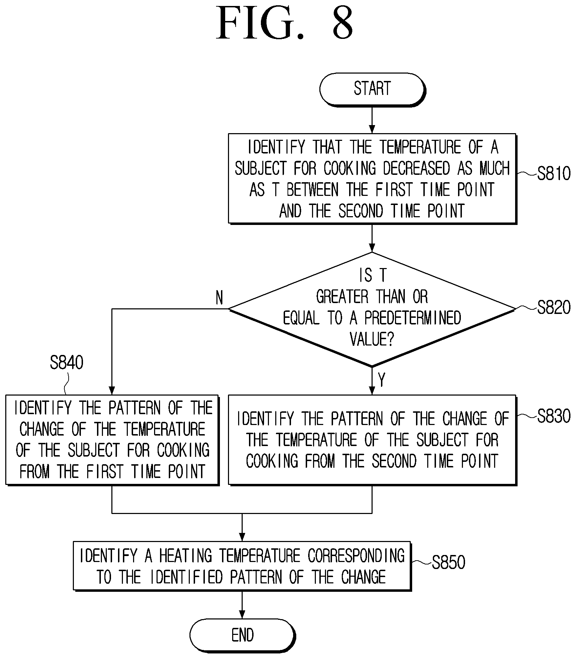

Specifically, referring to FIG. 8, the at least one processor 150 may identify that the temperature of the subject for cooking decreased as much as T between the first time point and the second time point in operation S810. Here, the first time point may mean the time point when the temperature of the subject for cooking starts to decrease. Meanwhile, the second time point may mean the time point when the temperature of the subject for cooking starts to increase.

Then, the at least one processor 150 may identify whether T is greater than or equal to a predetermined value in operation S820. If T is greater than or equal to the predetermined value (i.e., if the temperature of the subject for cooking decreases by greater than or equal to the predetermined value from the first time point to the second time point) in operation S820-Y, the at least one processor 150 may identify the pattern of the change of the temperature of the subject for cooking from the second time point in operation S830. Then, the at least one processor 150 may identify the heating temperature corresponding to the pattern of the change of the temperature of the subject for cooking from the second time point in operation S850.

If T is smaller than the predetermined value (i.e., if the temperature of the subject for cooking decreases by smaller than the predetermined value from the first time point to the second time point) in operation S820-N, the at least one processor 150 may identify the pattern of the change of the temperature of the subject for cooking from the first time point in operation S840. Then, the at least one processor 150 may identify the pattern of the change of the temperature of the subject for cooking from the first time point in operation S850.

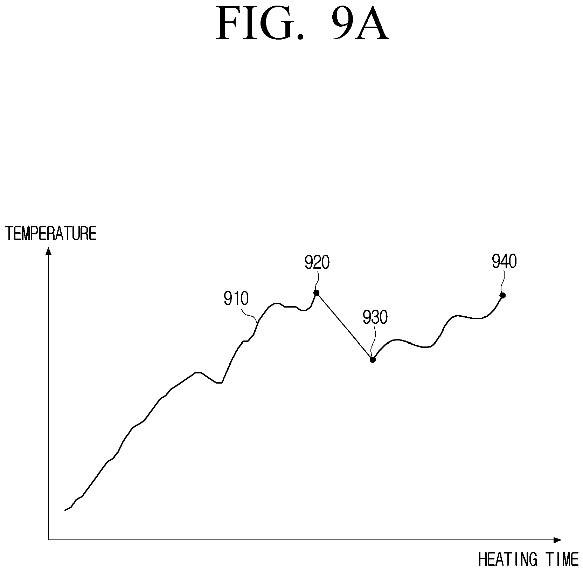

Specifically, the at least one processor 150 may acquire information (i.e., a temperature data set) on a graph 910 of a change of the temperature of a subject for cooking as illustrated in FIG. 9A. Here, a foreign substance may be introduced into the subject for cooking on the first time point 920, and the temperature of the subject for cooking may decrease until the second time point 930. Here, the difference between the temperature value of the subject for cooking on the first time point 920 and the temperature value of the subject for cooking on the second time point 930 may be T. Here, if T is greater than or equal to the predetermined value, the at least one processor 150 may exclude the temperatures of the subject for cooking before the second time point 930, and identify a heating temperature corresponding to the pattern of the change of the temperature of the subject for cooking from the second time point 930.

That is, the at least one processor 150 may acquire a value indicating the degree that the temperature of the subject for cooking changes from the second time point 930. Then, the at least one processor 150 may identify a heating temperature corresponding to the value indicating the degree that the temperature of the subject for cooking changes from the second time point 930. Here, the method for the at least one processor 150 to identify a value indicating the degree that the temperature of the subject for cooking changes from the second time point 930 may be the same as what was described above.

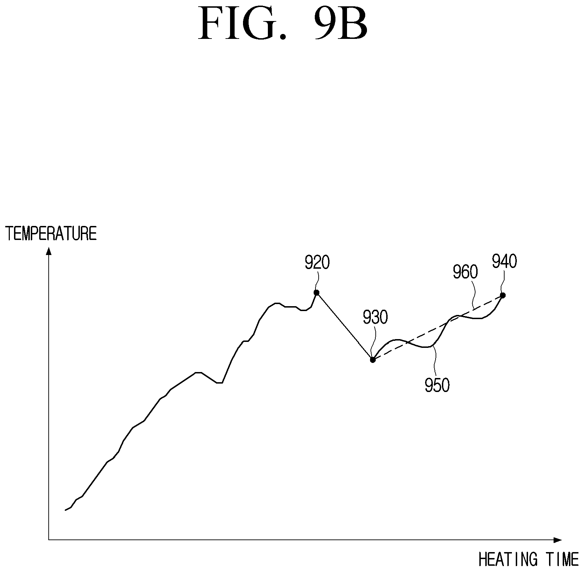

According to one or more embodiments of the disclosure, as illustrated in FIG. 9B, the at least one processor 150 may acquire information on a straight line 960 connecting the second time point 930 and the third time point 940. Then, the at least one processor 150 may acquire information on a deviation between the graph 950 of the change of the temperature of the subject for cooking between the second time point 930 and the third time point 940 and the acquired straight line 960. Specifically, the at least one processor 150 may acquire an MAE value between the graph 950 of the change of the temperature of the subject for cooking between the second time point 930 and the third time point 940 and the straight line 960. Then, the at least one processor 150 may identify a heating temperature corresponding to the acquired MAE value.

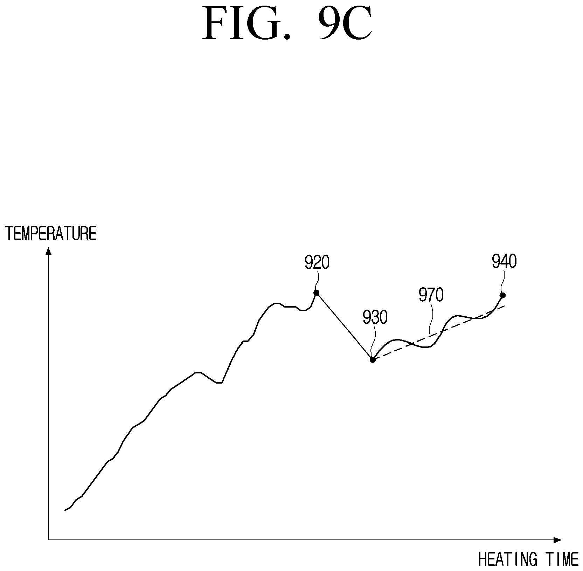

Alternatively, according to one or more embodiments of the disclosure, as illustrated in FIG. 9C, the at least one processor 150 may acquire information on a straight line 970 by performing regression analysis of the graph 950 of the change of the temperature of the subject for cooking between the second time point 930 and the third time point 940.

Then, the at least one processor 150 may acquire information on a deviation between the graph 950 of the change of the temperature of the subject for cooking between the second time point 930 and the third time point 940 and the acquired straight line 970. Specifically, the at least one processor 150 may acquire an MAE value between the graph 950 of the change of the temperature of the subject for cooking between the second time point 930 and the third time point 940 and the straight line 970. Then, the at least one processor 150 may identify a heating temperature corresponding to the acquired MAE value.

Meanwhile, according to one or more embodiments of the disclosure, the at least one processor 150 may identify whether to identify a heating temperature corresponding to a pattern of a change of the temperature of a subject for cooking based on information on the water level of the subject for cooking.

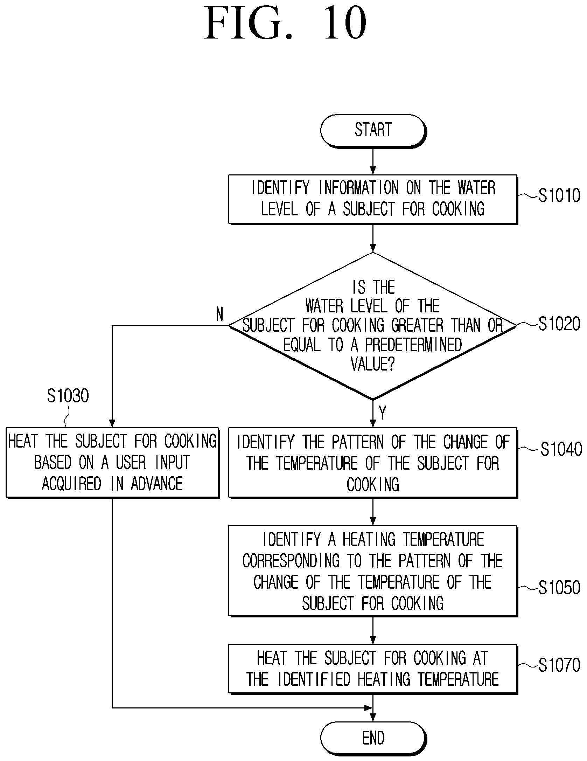

Specifically, referring to FIG. 10, the at least one processor 150 may acquire information on the water level of a subject for cooking from the external sensor 200 in operation S1010.

Then, the at least one processor 150 may identify whether the water level of the subject for cooking is greater than or equal to a predetermined value in operation S1020.

If the water level of the subject for cooking is smaller than the predetermined value in operation S1020-N, the at least one processor 150 may heat the subject for cooking based on a user input acquired in advance in operation S1030.

Meanwhile, if the water level of the subject for cooking is greater than or equal to the predetermined value in operation S1020-Y, the at least one processor 150 may identify a pattern of the change of the temperature of the subject for cooking in operation S1040. Then, the at least one processor 150 may identify a heating temperature corresponding to the pattern of the change of the temperature of the subject for cooking in operation S1050. Then, the at least one processor 150 may control the heating part 140 to heat the subject for cooking at the identified heating temperature in operation S1060.

That is, if the water level of the subject for cooking is greater than or equal to the predetermined value, the at least one processor 150 may identify a heating temperature corresponding to the pattern of the change of the temperature of the subject for cooking. Meanwhile, if the water level of the subject for cooking is smaller than the predetermined value, the at least one processor 150 may control the heating part 140 to heat the subject for cooking at a predetermined heating temperature based on a predetermined user input.

Meanwhile, according to one or more embodiments of the disclosure, the electronic apparatus 100 may acquire information on the type of a subject for cooking or a heating temperature corresponding to the type of a subject for cooking by using an artificial intelligence model.

The memory 110 may store at least one artificial intelligence model. Here, the at least one processor 150 may input a pattern of a change of the temperature of a subject for cooking (i.e., a value indicating variability of the temperature of a subject for cooking such as an MAE value acquired according to the aforementioned method) into the at least one artificial intelligence model, and acquire information on the type of the subject for cooking or a heating temperature corresponding to the type of the subject for cooking.

Here, the type of the subject for cooking may be water, water including a first foreign substance, or water including a second foreign substance, etc. Here, the memory 110 may store information on heating temperatures according to types of subjects for cooking, and the at least one processor 150 may control the heating part 140 to heat the subject for cooking at a heating temperature corresponding to the type of the subject for cooking. For example, if the type of the subject for cooking is water, the at least one processor 150 may identify the heating temperature as 97° C. Meanwhile, if the type of the subject for cooking is water including the first foreign substance, the at least one processor 150 may identify the heating temperature as 95° C. Also, if the type of the subject for cooking is water including the second foreign substance, the at least one processor 150 may identify the heating temperature as 93° C.

Here, the at least one artificial intelligence model may be a model that was trained by using a pattern of a change of the temperature of a subject for cooking as an independent variable, and the type of the subject for cooking or a heating temperature corresponding to the type of the subject for cooking as a dependent variable.

Meanwhile, the electronic apparatus 100 according to the disclosure may acquire information on the temperature of a subject for cooking by using a sensing value acquired through the external sensor 200, but this is merely an example, and the electronic apparatus 100 may include a sensor for detecting the temperature of a subject for cooking. Here, the sensor may directly detect the temperature of a subject for cooking, or detect the temperature of the heating part 140 contacting a cooking container.

Meanwhile, the electronic apparatus 100 according to the disclosure may be implemented as a cooking apparatus and acquire information on the temperature of a subject for cooking, and identify a heating temperature by identifying a pattern of the change of the temperature of the subject for cooking. However, this is merely an example, and the electronic apparatus 100 may be implemented as an apparatus controlling an external cooking apparatus.

Meanwhile, in the disclosure, the electronic apparatus 100 may identify a heating temperature, and control the heating part 140 or an external cooking apparatus to heat a subject for cooking at the identified heating temperature. However, this is merely an example, and the electronic apparatus 100 may identify at least one of a heating degree, a heating level, or a heating mode, and control the heating part 140 or an external cooking apparatus to cook the subject for cooking based on at least one of the identified heating degree, heating level, or heating mode.

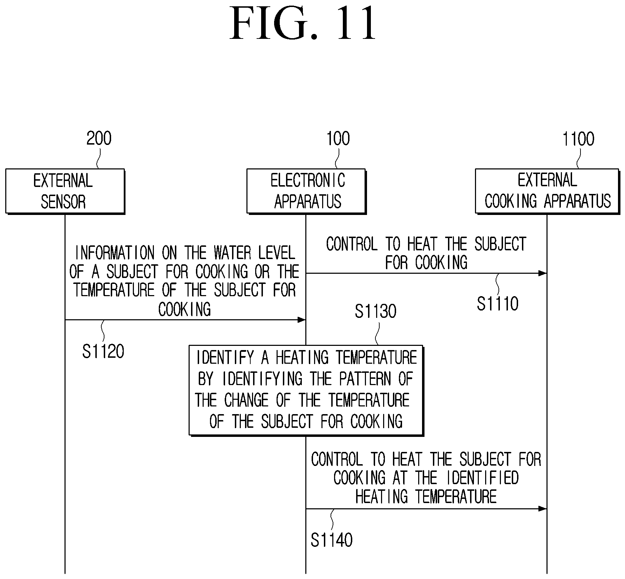

Referring to FIG. 11, the electronic apparatus 100 may transmit a signal for controlling an external cooking apparatus 1100 to heat a subject for cooking based on a user input to the external cooking apparatus 1100 in operation S1110.

Then, the electronic apparatus 100 may acquire information on the temperature of the subject for cooking heated through the external cooking apparatus 1100 or the water surface of the subject for cooking from the external sensor 200 in operation S1120.

Then, based on the acquired information on the temperature of the subject for cooking and the water surface of the subject for cooking, the electronic apparatus 100 may identify the pattern of the change of the temperature of the subject for cooking, and identify a heating temperature corresponding to the pattern of the change of the temperature of the subject for cooking in operation S1130. Here, the method for the electronic apparatus 100 to identify the pattern of the change of the temperature of the subject for cooking, or identify the heating temperature based on the information on the temperature of the subject for cooking or the water surface of the subject for cooking may be the same as what was described above.

Then, the electronic apparatus 100 may transmit a control signal for controlling the external electronic apparatus 1100 to heat the subject for cooking at the identified heating temperature to the external cooking apparatus 1100 in operation S1140.

Functions related to artificial intelligence according to the disclosure are operated through the processor and the memory of the electronic apparatus.

The processor may consist of one or a plurality of processors. Here, the one or plurality of processors may include at least one of a central processing unit (CPU), a graphic processing unit (GPU), or a neural processing unit (NPU), but the processors are not limited to the aforementioned examples of processors.

A CPU is a generic-purpose processor that can perform not only general operations but also artificial intelligence operations, and it can effectively execute a complex program through a multilayer cache structure. A CPU is advantageous for a serial processing method that enables a systemic linking between the previous calculation result and the next calculation result through sequential calculations. Meanwhile, a generic-purpose processor is not limited to the aforementioned examples excluding cases wherein it is specified as the aforementioned CPU.

A GPU is a processor for mass operations such as a floating point operation used for graphic processing, etc., and it can perform mass operations in parallel by massively integrating cores. In particular, a GPU may be advantageous for a parallel processing method such as a convolution operation, etc. compared to a CPU. Also, a GPU may be used as a co-processor for supplementing the function of a CPU. Meanwhile, a processor for mass operations is not limited to the aforementioned examples excluding cases wherein it is specified as the aforementioned GPU.

An NPU is a processor specialized for an artificial intelligence operation using an artificial neural network, and it can implement each layer constituting an artificial neural network as hardware (e.g., silicon). Here, the NPU is designed to be specialized according to the required specification of a company, and thus it has a lower degree of freedom compared to a CPU or a GPU, but it can effectively process an artificial intelligence operation required by the company. Meanwhile, as a processor specialized for an artificial intelligence operation, an NPU may be implemented in various forms such as a tensor processing unit (TPU), an intelligence processing unit (IPU), a vision processing unit (VPU), etc. Meanwhile, an artificial intelligence processor is not limited to the aforementioned examples excluding cases wherein it is specified as the aforementioned NPU.

Also, the one or plurality of processors may be implemented as a system on chip (SoC). Here, the SoC may further include a memory, and a network interface such as a bus for data communication between the processor and the memory, etc. other than the one or plurality of processors.

In case a plurality of processors are included in the system on chip (SoC) included in the electronic apparatus, the electronic apparatus may perform an operation related to artificial intelligence (e.g., an operation related to learning or inference of an artificial intelligence model) by using some processors among the plurality of processors. For example, the electronic apparatus may perform an operation related to artificial intelligence by using at least one of a GPU, an NPU, a VPU, a TPU, or a hardware accelerator specialized for artificial intelligence operations such as a convolution operation, a matrix product calculation, etc. among the plurality of processors. However, this is merely an example, and the electronic apparatus may process an operation related to artificial intelligence by using a generic-purpose processor such as a CPU, etc.

Also, the electronic apparatus may perform an operation for a function related to artificial intelligence by using a multicore (e.g., a dual core, a quad core, etc.) included in one processor. In particular, the electronic apparatus may perform artificial intelligence operations such as a convolution operation, a matrix product calculation, etc. in parallel by using the multicore included in the processor.

The one or plurality of processors perform control to process input data according to predefined operation rules or an artificial intelligence model stored in the memory. The predefined operation rules or the artificial intelligence model are characterized in that they are made through learning.

Here, being made through learning means that a learning algorithm is applied to a plurality of learning data, and predefined operation rules or an artificial intelligence model having desired characteristics are thereby made. Such learning may be performed in an apparatus itself wherein artificial intelligence is performed according to the disclosure, or performed through a separate server/system.

An artificial intelligence model may consist of a plurality of neural network layers. At least one layer has at least one weight value, and performs an operation of the layer through the operation result of the previous layer and at least one defined operation. As examples of a neural network, there are a convolutional neural network (CNN), a deep neural network (DNN), a recurrent neural network (RNN), a restricted Boltzmann Machine (RBM), a deep belief network (DBN), a bidirectional recurrent deep neural network (BRDNN), deep Q-networks, and a transformer, but the neural network in the disclosure is not limited to the aforementioned examples excluding specified cases.

A learning algorithm is a method of training a specific subject apparatus (e.g., a robot) by using a plurality of learning data and thereby making the specific subject apparatus make a decision or make prediction by itself. As examples of learning algorithms, there are supervised learning, unsupervised learning, semi-supervised learning, or reinforcement learning, but learning algorithms in the disclosure are not limited to the aforementioned examples excluding specified cases.

Meanwhile, the term "a part" or "a module" used in the disclosure may include a unit consisting of hardware, software, or firmware, and may be interchangeably used with, for example, terms such as a logic, a logical block, a component, or a circuit. In addition, "a part" or "a module" may be a component constituted as an integrated body or a minimum unit or a part of the component performing one or more functions. For example, a module may be constituted as an application-specific integrated circuit (ASIC).

Also, one or more embodiments of the disclosure may be implemented as software including instructions stored in machine-readable storage media, which can be read by machines (e.g., computers). The machines refer to apparatuses that call instructions stored in a storage medium, and can operate according to the called instructions, and the apparatuses may include the electronic apparatus 100 according to the aforementioned embodiments. In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term "non-transitory" only means that a storage medium does not include signals, and is tangible, but does not indicate whether data is stored in the storage medium semi-permanently or temporarily.

In addition, according to one or more embodiments, methods according to one or more embodiments disclosed herein may be provided while being included in a computer program product. A computer program product refers to a product, and it can be traded between a seller and a buyer. A computer program product can be distributed in the form of a storage medium that is readable by machines (e.g., a compact disc read only memory (CD-ROM)), or distributed on-line through an application store (e.g., Play Store^{™}). In the case of on-line distribution, at least a portion of a computer program product may be stored in a storage medium such as the server of the manufacturer, the server of the application store, and the memory of the relay server at least temporarily, or may be generated temporarily.

Also, each of the components (e.g., a module or a program) according to one or more embodiments may consist of a single entity or a plurality of entities, and among the aforementioned corresponding sub components, some sub components may be omitted, or other sub components may be further included in one or more embodiments. Alternatively or additionally, some components (e.g., a module or a program) may be integrated as an object, and perform the functions that were performed by each of the components before integration identically or in a similar manner. Operations performed by a module, a program, or other components according to one or more embodiments may be executed sequentially, in parallel, repetitively, or heuristically. Or, at least some of the operations may be executed in a different order or omitted, or other operations may be added.

## Claims

1. An electronic apparatus comprising:
a heating part configured to heat a subject for cooking;
a communication interface configured to communicate with an external sensor;
at least one memory storing at least one instruction; and
at least one processor that is connected with the at least one memory and is configured to execute the at least one instruction to:
acquire information on a temperature of the subject for cooking from the external sensor,
identify a heating temperature corresponding to a pattern of change of the temperature of the subject for cooking, and
control the heating part to heat the subject for cooking at the heating temperature.

2. The electronic apparatus of claim 1,
wherein the at least one processor is further configured to:
based on identifying that the pattern of change of the temperature of the subject for cooking corresponds to the temperature of the subject for cooking rising, identify a first value indicating a degree that the temperature of the subject for cooking changes, and
identify the heating temperature based on the first value.

3. The electronic apparatus of claim 2,
wherein the at least one processor is further configured to:
based on the first value being smaller than or equal to a predetermined value, identify a first temperature as the heating temperature, and
based on the first value exceeding the predetermined value, identify a second temperature lower than the first temperature as the heating temperature.

4. The electronic apparatus of claim 1,
wherein the at least one processor is further configured to:
acquire a mean absolute error (MAE) value between a line and a temperature data set, wherein the line is defined by a first point indicating a temperature value of the subject for cooking at a first time point and a second point indicating a temperature value of the subject for cooking at a second time point, and wherein the temperature data set comprises data reflecting changes to the temperature of the subject for cooking from the first time point to the second time point, and
identify the heating temperature based on the MAE value.

5. The electronic apparatus of claim 1,
wherein the at least one processor is further configured to:
acquire a mean absolute error (MAE) value between a line and a temperature data set, wherein the temperature data set comprises data reflecting changes to the temperature of the subject for cooking over a period of time, and wherein the line is acquired by performing a regression analysis of the temperature data set, and
identify the heating temperature based on the MAE value.

6. The electronic apparatus of claim 1,
wherein the at least one processor is further configured to:
based on identifying that the temperature of the subject for cooking decreases by greater than or equal to a predetermined value from a first time point to a second time point, identify a second heating temperature corresponding to the pattern of change of the temperature of the subject for cooking from the second time point.

7. The electronic apparatus of claim 1,
wherein the at least one processor is further configured to:
acquire, from the external sensor, information on a water level of the subject for cooking, and
based on the information on the water level indicating that the water level is greater than or equal to a predetermined value, identify the heating temperature based on the water level.

8. The electronic apparatus of claim 7,
wherein the at least one processor is further configured to:
based on the information on the water level indicating that the water level is lower than the predetermined value, control the heating part to heat the subject for cooking at a predetermined heating temperature.

9. The electronic apparatus of claim 1,
wherein the at least one processor is further configured to:
identify the heating temperature by inputting a value indicating the pattern of the change of the temperature of the subject for cooking into an artificial intelligence model.

10. A method of controlling an electronic apparatus, the method comprising:
acquiring information on a temperature of a subject for cooking from an external sensor;
identifying a heating temperature corresponding to a pattern of change of the temperature of the subject for cooking; and
heating the subject for cooking at the heating temperature.

11. The method of claim 10,
wherein the identifying the heating temperature further comprises:
based on identifying that the pattern of change of the temperature of the subject for cooking corresponds to the temperature of the subject for cooking rising, identifying a first value indicating a degree that the temperature of the subject for cooking changes; and
identifying the heating temperature based on the first value.

12. The method of claim 11,
wherein the identifying the heating temperature further comprises:
based on the first value being smaller than or equal to a predetermined value, identifying a first temperature as the heating temperature; and
based on the first value exceeding the predetermined value, identifying a second temperature lower than the first temperature as the heating temperature.

13. The method of claim 10,
wherein the identifying the heating temperature further comprises:
acquiring a mean absolute error (MAE) value between a line and a temperature data set, wherein the line is defined by a first point indicating a temperature value of the subject for cooking at a first time point and a second point indicating a temperature value of the subject for cooking at a second time point, and wherein the temperature data set comprises data reflecting changes to the temperature of the subject for cooking from the first time point to the second time point, and
identifying the heating temperature based on the MAE value.

14. The method of claim 10,
wherein the identifying the heating temperature further comprises:
acquiring a mean absolute error (MAE) value between a line and a temperature data set, wherein the temperature data set comprises data reflecting changes to the temperature of the subject for cooking over a period of time, and wherein the line is acquired by performing a regression analysis of the temperature data set, and
identifying the heating temperature based on the MAE value.

15. A non-transitory computer readable medium having at least one instruction stored therein, which when executed by at least one processor cause the at least one processor to execute a method of controlling an electronic apparatus, the method comprising:
acquiring information on a temperature of a subject for cooking from an external sensor;
identifying a heating temperature corresponding to a pattern of change of the temperature of the subject for cooking; and
heating the subject for cooking at the heating temperature.
